# EUROPÄISCHE PATENTANMELDUNG

(11) **EP 4 671 536 A1**
(43) Veröffentlichungstag der Anmeldung: **31.12.2025**
(21) Anmeldenummer: 24183880.4
(22) Anmeldetag: 24.06.2024
(51) Int. Cl.: F03D 15/00, F03D 80/70, F16H 57/025, F16H 57/02

(54) **TRIEBSTRANGLAGERUNG**

(71) Anmelder: Flender GmbH, 46395 Bocholt (DE)
(72) Erfinder: HAMBRECHT, Dr. Ralf, 46395 Bocholt (DE)
(74) Vertreter: Michalski Hüttermann & Partner Patentanwälte mbB

(57) **Zusammenfassung**

Die Erfindung betrifft eine Triebstranglagerung 10 für eine Windkraftanlage 100 in aufgelöster Lagerung, umfassend einen Maschinenträger 114, eine gegenüber dem Maschinenträger 114 abgestützte Rotorlagerung 120 mit einer um eine Triebstrangachse A_{D} gelagerten Rotorwelle 118, eine Drehmomentstütze 14 mit zumindest zwei Stützarmen 16, eine über die Rotorwelle 118 um die Triebstrangachse A_{D} angetriebene Getriebekomponente 12, wobei die Getriebekomponente 12 zumindest mittelbar über die zumindest zwei in radiale Richtungen auskragenden Stützarme 16 der Drehmomentstütze 14 abgestützt ist. Die Drehmomentstütze 14 ist unter einem axialen Versatz Vₐ wirksam an dem Maschinenträger 114 abgestützt. Durch den axialen Versatz wird eine Aufrichtkraft erzeugt, über die ein aufrichtendes und auf der Getriebekomponente 12 wirksames Moment erzeugt wird.

## Beschreibung

Die Erfindung betrifft eine Triebstranglagerung für eine Windkraftanlage in aufgelöster Lagerung, umfassend einen Maschinenträger, eine gegenüber dem Maschinenträger abgestützte Rotorlagerung mit einer um eine Triebstrangachse A_{D} gelagerten Rotorwelle, eine Drehmomentstütze mit zumindest zwei Stützarmen, eine über die Rotorwelle um die Triebstrangachse A_{D} angetriebene Getriebekomponente, wobei die Getriebekomponente zumindest mittelbar über die zumindest zwei in radiale Richtungen auskragenden Stützarme der Drehmomentstütze abgestützt ist.

Für Windkraftanlagen können sogenannte Vierpunkt-Lagerungen - auch aufgelöste Lagerung genannt - mit doppelt gelagerter Rotorwelle zur Aufnahme von Biegemomenten und angebundener Getriebe/Generator-Einheit mit Drehmomentstütze vorgesehen sein. Bei dieser Konfiguration wird die Gewichtskraft der Getriebe/Generator-Einheit nicht von der Umgebungsstruktur - in der Regel der Maschinenträger zur Anbindung an den Turm - getragen, sondern von der Rotorwelle und deren Lagerung im Lagergehäuse. Als Gegengewicht zu der Gewichtskraft der Getriebe/Generator-Einheit fungiert die Gewichtskraft des Rotors und der Rotornabe.

Die Gewichtskraft der Getriebe/Generator-Einheit erzeugen ein Kippmoment, das durch die Lagerung der Planetenträger aufgenommen werden muss. Durch das Spiel in der Lagerung oder dessen Nachgiebigkeit erfährt die Verzahnung eine ungleichmäßige und dadurch ungünstige Belastung. Darüber hinaus werden rotierende Komponenten wie Planetenträger, Getriebe-Rotorwellenflansch sowie die Rotorwelle an sich mit zyklischer Umlaufbiegung belastet. Dieser Effekt muss in der Dimensionierung der Bauteil berücksichtigt werden und führt zu schwereren Auslegungen. Dem Problem der Umlaufbiegung wird also durch Überdimensionierung der betroffenen Maschinenelemente - in der Regel Rotorwelle, Rotorlager, Planetenträger, Planetenträgerlager und Getriebe-Rotorflansch - begegnet, wodurch allerdings ein Kosten- und Gewichtsnachteil entsteht.

Es ist zwar möglich eine Gewichtskraftabstützung zwischen Getriebe/Generator-Einheit und Maschinenträger vorzusehen, allerdings ist hierfür die Tragstruktur unterhalb der Getriebe/Generator-Einheit oftmals nicht ausgelegt, so dass bei Nickbewegung des Antriebsstrangs deutliche Lastüberhöhungen entstehen können, die auch die Flanschverbindungen zwischen Getriebe und Generator zusätzlich belasten.

Eine weitere Möglichkeit der Kippmomentreduzierung ist in der WO 2023/169909 A1 beschrieben, die allerdings konstruktiv aufwendig ist. Durch die EP 1 788 281 A1 wird die Auswirkung auf die Verzahnung vermindert, jedoch nicht das Kippmoment an sich reduziert. Es besteht ein ständiges Bedürfnis nach Lösungen, das wirksame Kippmoment zu reduzieren.

Es ist die Aufgabe der Erfindung Maßnahmen aufzuzeigen, die das wirksame Kippmoment reduzieren.

Die Lösung der Aufgabe erfolgt durch eine Triebstranglagerung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Triebstranglagerung für eine Windkraftanlage in aufgelöster Lagerung, umfassend einen Maschinenträger, eine gegenüber dem Maschinenträger abgestützte Rotorlagerung mit einer um eine Triebstrangachse A_{D} gelagerten Rotorwelle, eine Drehmomentstütze mit zumindest zwei Stützarmen, eine über die Rotorwelle um die Triebstrangachse A_{D} angetriebene Getriebekomponente, wobei die Getriebekomponente zumindest mittelbar über die zumindest zwei in radiale Richtungen auskragenden Stützarme der Drehmomentstütze unter einem axialen Versatz wirksam an dem Maschinenträger abgestützt ist.

Bei dem Maschinenträger kann es sich um ein Rahmenelement handeln, das die Verbindung zu einem Turm der Windkraftanlage herstellt. Der Maschinenträger bildet eine Tragstruktur der Windkraftanlage. Die Triebstrangachse A_{D} ist eine Drehachse, um die die Rotorwelle über einen Rotor drehend angetrieben wird und um die die angetriebene Getriebekomponente rotiert. Es kann ein Flanschelement vorgesehen sein, über das die Drehmomentstütze an der Getriebekomponente mittelbar oder unmittelbar befestigt ist.

Infolge des axialen Versatzes, unter dem die Drehmomentstütze wirksam an dem Maschinenträger abgestützt ist, weist die Drehmomentstütze eine definierte unsymmetrische Ausführung auf und erzeugt damit zwei entlang der Triebstrangachse versetzte, zumindest mittelbare Abstützungspunkte zum Maschinenträger. Durch den axialen Versatz wird ein Kräftepaar erzeugt, im Folgenden auch erste Aufrichtkraft und zweite Aufrichtkraft bezeichnet, über das ein aufrichtendes und auf der Getriebekomponente wirksames Moment erzeugt, das dem aufgrund der Gewichtskraft der Getriebekomponente wirksame Kippmoment entgegenwirkt. Das Aufrichtmoment stellt sich proportional zum Antriebsdrehmoment des Rotors ein und reduziert das nachteilige Kippmoment. Denkbar ist zudem, dass das Aufrichtmoment zumindest in bestimmten Betriebszuständen das Kippmoment kompensiert.

Bei der vorgeschlagenen Lösung wird kein zusätzliches Bauteil nötig, vorhandene Überdimensionierungen können entfallen und folglich Kosten gespart werden. Lediglich die bereits vorhandene Drehmomentstütze wird modifiziert ausgeführt und an abweichenden Bereichen mittelbar oder unmittelbar gegenüber dem Maschinenträger befestigt. Die allgemeine Tragstruktur der Windkraftanlage ist bereits für derartige Lasten ausgelegt und muss nicht separat dafür ertüchtigt werden. Es wird nicht nur der Verkippungseffekt auf die Verzahnung reduziert, sondern es reduziert sich auch das Kippmoment in Abhängigkeit des Antriebsmomentes.

In einer ersten bevorzugten Ausführungsform stützen sich die Stützarme der Drehmomentstütze über einen jeweiligen Auflagebereich an dem Maschinenträger ab, wobei die Auflagebereiche untereinander den axialen Versatz aufweisen. Bei dieser Variante ist also eine unmittelbare Abstützung der Drehmomentstütze gegenüber dem Maschinenträger vorgesehen. Hierbei kann die Drehmomentstütze vor - d.h. rotorseitig - oder hinter - d.h. generatorseitig - dem Hohlrad der Planetenstufe angeordnet sein.

In einer zweiten bevorzugten Ausführungsform sind die Stützarme der Drehmomentstütze über einen jeweiligen Anbindungsbereich an einem Rotorlagergehäuse der Rotorlagerung gehalten, wobei die Anbindungsbereiche untereinander den axialen Versatz aufweisen. Bei dieser Variante ist also eine mittelbare Abstützung der Drehmomentstütze gegenüber dem Maschinenträger vorgesehen und zwar indem sich die Drehmomentstütze unmittelbar am Rotorlagergehäuse abstützt und dieses wiederum gegenüber dem Maschinenträger befestigt ist.

In einer weiteren bevorzugten Ausgestaltung ist die Drehmomentstütze zumindest teilweise rotorlagerseitig eines Hohlrades angeordnet, wobei die Getriebekomponente als Planetengetriebe und das Hohlrad des Planetengetriebes als integrierter Bestandteil eines Getriebegehäuses ausgeführt ist. Hierbei kann in einer konkreten Ausgestaltung vorgesehen sein, dass die Drehmomentstütze einteilig ausgeführt ist und die Stützarme in entgegengesetzte axiale Richtungen abgekröpft sind, um den axialen Versatz zu erzeugen.

In einer alternativ bevorzugten Ausgestaltung der Drehmomentstütze kann vorgesehen sein, dass die mehrteilig ausgeführt ist und die Stützarme unter Bildung des axialen Versatzes zueinander angeordnet sind. Insbesondere kann diese Anordnung derart ausgeführt sein, dass einer der Stützarme auf der rotorlagerabgewandten Seite des Hohlrades angeordnet ist. Dies ist vorteilhat, da nur jeweils die Hälfte des Abstützmoments über die Verbindungsfüge zwischen Hohlrad und rotorlagerseitigem Stützarm bzw. über die Verbindungsfüge zwischen Hohlrad und rotorlagerabgewandten Stützarm übertragen werden muss.

Die Aufgabe wird zudem gelöst durch ein Verfahren zur Kompensation eines durch eine Gewichtskraft einer in aufgelöster Lagerung angeordneten Getriebe/Generatorkomponente einer Windkraftanlage hervorgerufenen Kippmoments, bei dem für einen bestimmten Betriebspunkt der Windkraftanlage durch ein axiales Versetzen der zumindest zwei in radiale Richtungen auskragenden Stützarme der die Getriebe/Generatorkomponente abstützenden Drehmomentstütze ein das Kippmoment kompensierendes Aufrichtkräftepaar erzeugt wird. Die Einstellung bzw. das Maß des axialen Versatzes wird optimalerweise so gewählt, dass für den Nennbetriebspunkt - Nennantriebsmoment - bzw. den Betriebspunkt der Windkraftanlage, für den der größte Energieertrag erwartet wird, das Kippmoment durch das resultierende Aufrichtmoment kompensiert wird.

Die Aufgabe wird ferner gelöst durch einen Antriebsstrang für eine Windkraftanlage zur drehmomentübertragenden Verbindung eines Rotors mit einem Generator, wobei der Antriebsstrang wie die beschriebene Triebstranglagerung ausgeführt ist.

Auch gelöst wird die Aufgabe durch eine Windkraftanlage, umfassend einen Rotorflansch mit einem Rotor und einen Generator, wobei ein den Rotorflansch mit dem Generator verbindender Antriebsstrang vorgesehen ist, dadurch gekennzeichnet, dass der Antriebsstrang wie beschrieben ausgebildet ist

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung einer Windkraftanlage,
Fig. 2: eine Draufsicht einer ersten Variante einer Drehmomentstütze für eine Windkraftanlage gemäß Fig. 1,
Fig. 3: eine Seitenansicht der ersten Variante einer Drehmomentstütze,
Fig. 4: eine Draufsicht einer zweiten Variante einer Drehmomentstütze für eine Windkraftanlage gemäß Fig. 1,
Fig. 5: eine Draufsicht einer weiteren Variante einer Drehmomentstütze für eine Windkraftanlage gemäß Fig. 1 und
Fig. 6: einen schematischen Verfahrensablauf zur Kompensation eines durch eine Gewichtskraft hervorgerufenen Kippmoments.

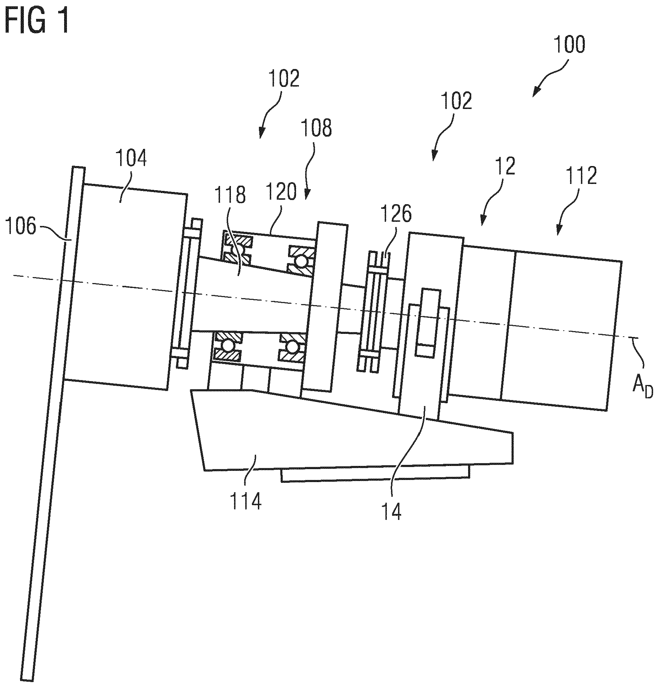

Die Figur 1 zeigt in schematischer und nicht maßstabsgetreuer Darstellung eine Windkraftanlage 100 in einer möglichen Ausführung. Gezeigt ist eine Seitendarstellung. Wesentliches Element der Windkraftanlage 100 ist ein Antriebstrang 102, der vorliegend strukturell einen Rotorflansch 104 mit einem Rotor 106, eine Rotorlagerung 108, eine Getriebekomponente 12 und einen Generator 112 umfassen kann. Über einen Maschinenträger 114 werden zumindest die Rotorlagerung 108 und der Generator 112 über einen nicht dargestellten Turm auf einem Boden abgestützt. Die Rotorlagerung 108 umfasst eine Rotorwelle 118, die z.B. über eine angestellte Kegelrollenlagerung gegenüber einem Rotorlagergehäuse 120 der Rotorlagerung 108 drehbar um eine Triebstrangachse A_{D} gelagert ist. Die Triebstrangachse A_{D} bestimmt eine axiale Richtung.

An einem Ende der Rotorwelle 118 ist der Rotorflansch 104 und an diesem der Rotor 106 gehalten. Das andere Ende der Rotorwelle 118 ist eine Getriebekomponente 12 antriebsmäßig verbunden, um ein von dem Rotor 106 aufgebrachtes Antriebsmoment zu übersetzen. Die Getriebekomponente 12 ist als Planetengetriebe mit einer oder mehreren Planetenstufen ausgeführt. Die Getriebekomponente 12 ist antriebsmäßig mit dem Generator 112 verbunden. Über einen Flansch 126 ist das Rotorlagergehäuse 120 mit der Getriebekomponente 12 verbunden. Ein Reaktionsmoment der Getriebekomponente 12 - und auch des angeflanschtes Generators 112 - ist über eine Drehmomentstütze 14 gegenüber dem Maschinenträger 114 abgestützt. Hierbei kann in einer ersten Variante die Drehmomentstütze 14 - wie in der Figur 1 dargestellt - die Getriebekomponente 12 unmittelbar mit dem Maschinenträger 114 verbinden. Der Maschinenträger 114, die Rotorlagerung 108 mit Rotorwelle 118, die Drehmomentstütze 14 und die Getriebekomponente 12 können als Triebstranglagerung 10 bezeichnet werden.

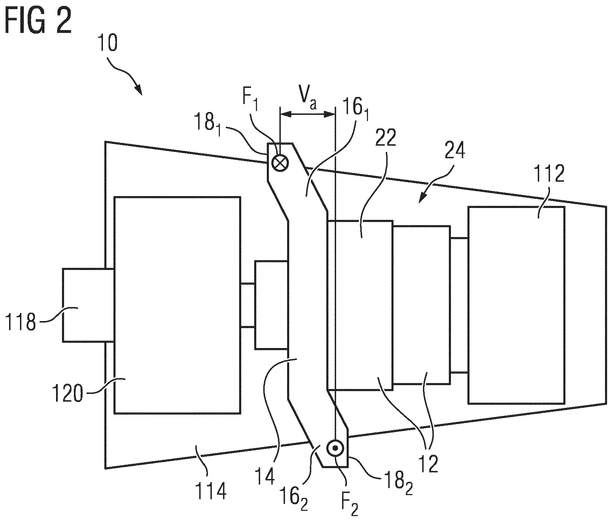

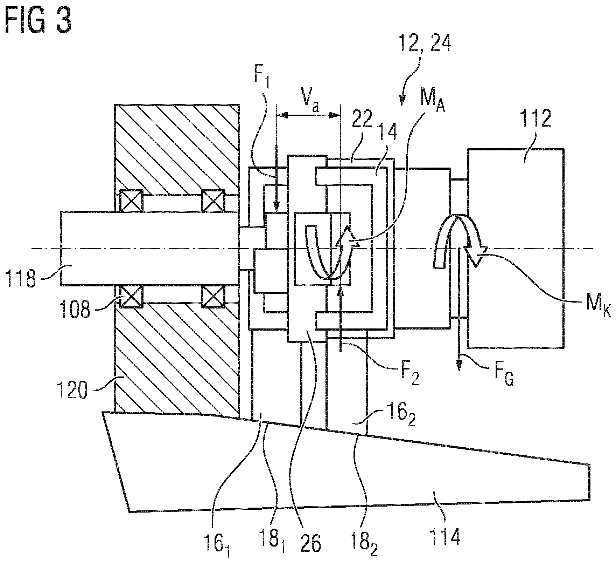

Die Figuren 2 und 3 werden nachfolgend gemeinsam beschrieben, wobei die erste Variante der Drehmomentstütze 14 gezeigt ist, bei der diese die Getriebekomponente 12 unmittelbar mit dem Maschinenträger 114 verbindet. Bezüglich des strukturellen Aufbaus der Triebstranglagerung 10 wird auf die Figur 1 verwiesen. Die Drehmomentstütze 14 ist über ein Flanschelement 26 an der als Planetengetriebe ausgeführten Getriebekomponente 14 gehalten. Das Planetengetriebe 14 weist in einer ersten Planetenstufe ein als integrierter Bestandteil eines Getriebegehäuses 24 ausgeführtes Hohlrad 22 auf. Die Drehmomentstütze 14 ist vorliegend rotorlagerseitig des Hohlrades 22 an einem Flanschelement 26 angeordnet, wobei das Flanschelement 26 an dem Hohlrad 22 befestigt ist.

Die Drehmomentstütze 14 verfügt über zwei in radiale Richtungen auskragende Stützarme 16₁, 16₂, wie insbesondere der Figur 2 entnommen werden kann. Über die Stützarme 16₁, 16₂ ist die Drehmomentstütze 14, und damit das Planetengetriebe 14 und der angeflanschte Generator 112, an dem Maschinenträger 114 abgestützt. Weiterhin sind die Stützarme unter einem axialen Versatz Vₐ wirksam an dem Maschinenträger 114 abgestützt. Die Stützarme 16₁, 16₂ der Drehmomentstütze 14 stützen sich über einen jeweiligen Auflagebereich 18₁, 18₂ an dem Maschinenträger 114 ab. Die Auflagebereiche 18₁, 18₂ weisen untereinander ebenfalls den axialen Versatz Vₐ auf. Die Drehmomentstütze 14 ist bei dieser Variante beispielsweise einteilig ausgeführt und die Stützarme 16₁, 16₂ sind in entgegengesetzte axiale Richtungen abgekröpft, um den axialen Versatz Vₐ zu erzeugen.

Durch den axialen Versatz Vₐ wird eine erste Aufrichtkraft F₁ und eine zweite Aufrichtkraft F₂ erzeugt, über die ein aufrichtendes und auf das Planetengetriebe 12 wirksames Moment erzeugt, das dem aufgrund der Gewichtskraft F_{G} des Planetengetriebes 12 und des angeflanschtes Generators 112 wirksamen Kippmoment M_{K} entgegenwirkt. Die beiden Aufrichtkräfte F₁ und F₂ erzeugen folglich ein dem Kippmoment M_{K} entgegengerichtetes Aufrichtmoment M_{A}. Die Aufrichtkräfte F₁ und F₂ und die Momente M_{K} und M_{A} sind in den Figuren lediglich einskizziert und geben weder genaue Richtung noch Beträge wieder. Das Aufrichtmoment M_{A} ist abhängig von dem Maß des axialen Versatz Vₐ zwischen den Auflagebereich 18₁, 18₂ der Stützarme 16₁, 16₂ an dem Maschinenträger 114. Das Aufrichtmoment M_{A} ist einstellbar über das Maß des axialen Versatz Vₐ zwischen den Auflagebereichen 18₁, 18₂.

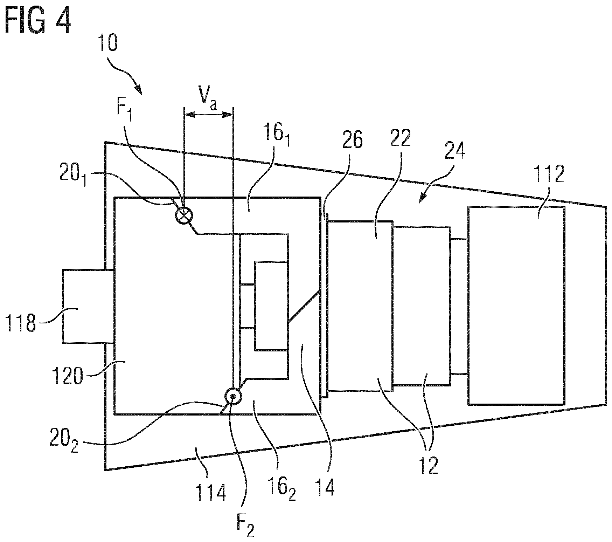

Die Figur 4 zeigt in einer Draufsicht eine weitere Variante der Drehmomentabstützung, bei der die Drehmomentstütze 14 die Getriebekomponente 12 mittelbar über das Rotorlagergehäuse 120 mit dem Maschinenträger 114 verbindet. Die Stützarme 16₁, 16₂ sind hier in axialer Richtung auskragend ausgeführt und über Anbindungsbereiche 20₁, 20₂ an dem Rotorlagergehäuse 120 gehalten.

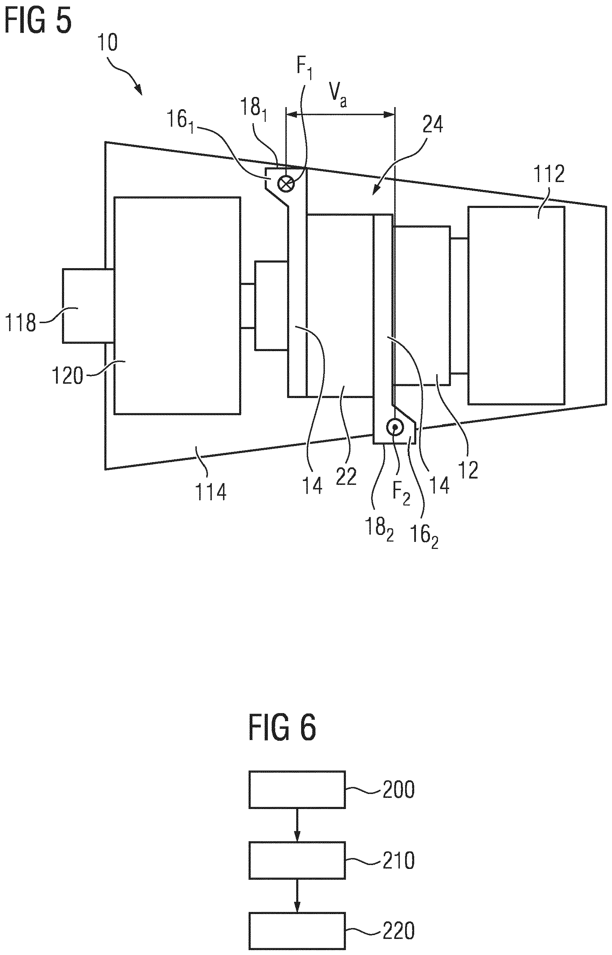

Die Figur 5 zeigt eine Variante der Drehmomentstütze 14, die mehrteilig, insbesondere zweiteilig, ausgeführt ist. Es sind weiterhin zwei Stützarme 16₁, 16₂ vorgesehen, die parallel zueinander derart angeordnet sind, dass der Abstand zwischen den zwei Stützarme 16₁, 16₂ den axialen Versatz Vₐ herstellt. Einer der Stützarme 16₁, 16₂ ist auf der rotorlagerabgewandten Seite des Hohlrades 22 angeordnet.

Die Figur 6 beschreibt schematisch ein Verfahren zur Kompensation eines durch eine Gewichtskraft F_{G} einer in aufgelöster Lagerung angeordneten Getriebe/Generatorkomponente 12, 112 einer Windkraftanlage 100 hervorgerufenen Kippmoments Mx. In Verfahrensschritt 200 wird ein bestimmter Betriebspunkt der Windkraftanlage 100 festgelegt, für den eine Kompensation des Kippmoments M_{K} erfolgen soll. In Verfahrensschritt 210 wird das Maß des axialen Versatzes Vₐ bestimmt. In Verfahrensschritt 220 erfolgt der Betrieb der Windkraftanlage 100, um ein das Kippmoment M_{K} kompensierendes Aufrichtkräftepaar F₁ und F₂ zu erzeugen.

### Bezugszeichenliste

- 10: Triebstranglagerung
- 12: Getriebekomponente
- 14: Drehmomentstütze
- 16: Stützarm
- 18: Auflagebereich
- 20: Anbindungsbereich
- 22: Hohlrad
- 24: Getriebegehäuse
- 26: Flanschelement
- 100: Windkraftanlage
- 102: Antriebstrang
- 104: Rotorflansch
- 106: Mehrblattrotor
- 108: Rotorlagerung
- 112: Generator
- 114: Maschinenträger
- 118: Rotorwelle
- 120: Rotorlagergehäuse
- 124: Generatorwelle
- 126: Flansch
- Vₐ: Versatz

## Patentansprüche

1. Triebstranglagerung (10) für eine Windkraftanlage (100) in aufgelöster Lagerung, umfassend
einen Maschinenträger (114),
eine gegenüber dem Maschinenträger (114) abgestützte Rotorlagerung (108) mit einer um eine Triebstrangachse A_{D} gelagerten Rotorwelle (118),
eine Drehmomentstütze (14) mit zumindest zwei Stützarmen (16₁, 16₂),
eine über die Rotorwelle (118) um die Triebstrangachse A_{D} angetriebene Getriebekomponente (12),
wobei die Getriebekomponente (14) zumindest mittelbar über die zumindest zwei in radiale und/oder axiale Richtungen auskragenden Stützarme (16₁, 16₂) der Drehmomentstütze (14) unter einem axialen Versatz (Vₐ) wirksam an dem Maschinenträger (114) abgestützt ist.

2. Triebstranglagerung (10) nach Anspruch 1, **dadurch gekennzeichnet, dass** die Stützarme (16₁, 16₂) der Drehmomentstütze (14) sich über einen jeweiligen Auflagebereich (18₁, 18₂) an dem Maschinenträger (114) abstützen, wobei die Auflagebereiche (18₁, 18₂) untereinander den axialen Versatz (Vₐ) aufweisen.

3. Triebstranglagerung (10) nach Anspruch 1, **dadurch gekennzeichnet, dass** die Stützarme (16₁, 16₂) der Drehmomentstütze (14) über einen jeweiligen Anbindungsbereich (20₁, 20₂) an einem Rotorlagergehäuse (120) der Rotorlagerung (108) gehalten sind, wobei die Anbindungsbereiche (20₁, 20₂) untereinander den axialen Versatz (Vₐ) aufweisen.

4. Triebstranglagerung (10) nach einem der Ansprüche 1 bis 3, **dadurch gekennzeichnet, dass** die Getriebekomponente (12) als Planetengetriebe und ein Hohlrad (22) des Planetengetriebes (12) als integrierter Bestandteil eines Getriebegehäuses (24) ausgeführt ist, wobei die Drehmomentstütze (14) zumindest teilweise rotorlagerseitig des Hohlrades (22) angeordnet ist.

5. Triebstranglagerung (10) nach einem der Ansprüche 1 bis 4, **dadurch gekennzeichnet, dass** die Drehmomentstütze (14) einteilig ausgeführt ist und die Stützarme (16₁, 16₂) in entgegengesetzte axiale Richtungen abgekröpft sind, um den axialen Versatz (Vₐ) zu erzeugen.

6. Triebstranglagerung (10) nach einem der Ansprüche 1 bis 4, **dadurch gekennzeichnet, dass** die Drehmomentstütze (14) mehrteilig ausgeführt ist und die Stützarme (16₁, 16₂) unter Bildung des axialen Versatzes (Vₐ) zueinander angeordnet sind.

7. Triebstranglagerung (10) nach Anspruch 4 und 6, **dadurch gekennzeichnet, dass** einer der Stützarme (16₁, 16₂) auf der rotorlagerabgewandten Seite der Hohlradbandage (22) angeordnet ist.

8. Verfahren zur Kompensation eines durch eine Gewichtskraft (F_{G}) einer in aufgelöster Lagerung angeordneten Getriebe/Generatorkomponente (12, 112) einer Windkraftanlage (100) hervorgerufenen Kippmoments (M_{K}), bei dem für einen bestimmten Betriebspunkt der Windkraftanlage (100) durch ein axiales Versetzen der zumindest zwei in radiale und/oder axiale Richtungen auskragenden Stützarme (16₁, 16₂) der die Getriebe/Generatorkomponente (12, 112) abstützenden Drehmomentstütze (14) ein das Kippmoment (M_{K})kompensierendes Aufrichtkräftepaar (F₁, F₂) erzeugt wird.

9. Antriebsstrang (102) für eine Windkraftanlage (100) zur drehmomentübertragenden Verbindung eines Rotors (106) mit einem Generator (112), wobei der Antriebsstrang (102) nach einem der vorangegangenen Ansprüche ausgeführt ist.

10. Windkraftanlage (100), umfassend einen Rotorflansch (104) mit einem Rotor (106) und einen Generator (112), wobei ein den Rotorflansch (104) mit dem Generator (112) verbindender Antriebsstrang (102) vorgesehen ist, **dadurch gekennzeichnet, dass** der Antriebsstrang (102) nach Anspruch 9 ausgebildet ist.
